# EUROPEAN PATENT APPLICATION

(11) **EP 4 769 889 A1**
(43) Date of publication of application: **01.07.2026**
(21) Application number: 25225742.3
(22) Date of filing: 19.12.2025
(51) Int. Cl.: H02J 7/02, H02M 1/36, H02M 7/219, B60L 53/22

(54) **CHARGING MODULE AND CHARGING DEVICE**

(30) Priority: 24.12.2024 CN 202411945254
(71) Applicant: Huawei Technologies Co., Ltd., Shenzhen, Guangdong 518129 (CN)
(72) Inventor: WANG, Yin, Shenzhen, Guangdong, 518129 (CN); CHEN, Gao, Shenzhen, Guangdong, 518129 (CN); XIE, Wangkun, Shenzhen, Guangdong, 518129 (CN); YAN, Chengzhang, Shenzhen, Guangdong, 518129 (CN)
(74) Representative: Maiwald GmbH

(57) **Abstract**

Embodiments of this application disclose a charging module (400) and a charging device, and relate to the field of power electronics technologies, to resolve a problem of how to implement a charging module with a simple structure, low costs, and high reliability. The charging module includes a controller (410), a resistor (R), an AC-DC power conversion circuit (420), and two switches (K1, K2). Three input ends of the AC-DC power conversion circuit (420) are respectively configured to connect to three phase output ends of an alternating current power supply (200) in a one-to-one correspondence manner, the three input ends of the AC-DC power conversion circuit (420) are further separately configured to connect to a ground end via capacitors (C1-C3), the two switches (K1, K2) are respectively disposed between two input ends of the AC-DC power conversion circuit (420) and two corresponding phase output ends of the alternating current power supply (200), and the resistor (R) is connected in parallel to a first switch (K1) in the two switches. The controller is configured to: when an absolute value of a voltage difference between two ends of the resistor is less than or equal to a first voltage threshold, control the first switch to be turned on.

## Description

### TECHNICAL FIELD

This application relates to the field of power electronics technologies, and in particular, to a charging module and a charging device.

### BACKGROUND

A charging module includes an alternating current to direct current (alternating current to direct current, AC-DC) power conversion circuit and three relays. One end of each of the three relays is respectively configured to connect to three phase output ends of an alternating current power supply in a one-to-one correspondence manner, and the other end of each of the three relays is respectively connected to three input ends of the AC-DC power conversion circuit in a one-to-one correspondence manner. The three input ends of the AC-DC power conversion circuit are further separately configured to connect to a ground end via capacitors. An output end of the AC-DC power conversion circuit is configured to connect to a load, so that the AC-DC power conversion circuit can supply power to the load.

The charging module may further include three resistors. All the three resistors may be referred to as soft-start resistors. The three resistors are respectively connected in parallel to the three relays in a one-to-one correspondence manner. The three resistors are configured to limit charging currents or discharging currents of the capacitors. Therefore, when the three relays are turned on and the capacitors are charged or discharged, currents flowing through the capacitors are small, so that impact on another component that is in the charging module and that is grounded with the capacitors can be reduced, a probability of damage to the another component that is in the charging module and that is grounded with the capacitors can be reduced, and reliability and safety of the charging module can be improved.

However, disposing the three resistors in the charging module causes a complex structure and high costs of the charging module. In addition, the three resistors are disposed in the charging module, and consequently, there may still be a large voltage difference between two ends of the relay when the relay is turned on. This may cause interference to a component in a circuit with a weak voltage regulation capability in the charging module, resulting in an increase in a probability of component failure and disorder and low reliability of the charging module. Therefore, how to implement a charging module with a simple structure, low costs, and high reliability becomes an urgent problem to be resolved.

### SUMMARY

Embodiments of this application provide a charging module and a charging device, to resolve a problem of how to implement a charging module with a simple structure, low costs, and high reliability.

To achieve the foregoing objective, the following technical solutions are used in embodiments of this application.

According to a first aspect of embodiments of this application, a charging module is provided. The charging module includes a controller, a resistor, an AC-DC power conversion circuit, and two switches. Three input ends of the AC-DC power conversion circuit are respectively configured to connect to three phase output ends of an alternating current power supply in a one-to-one correspondence manner, the three input ends of the AC-DC power conversion circuit are further separately configured to connect to a ground end via capacitors, the two switches are respectively disposed between two input ends of the AC-DC power conversion circuit and two corresponding phase output ends of the alternating current power supply, and the resistor is connected in parallel to a first switch in the two switches. The controller is configured to: when an absolute value of a voltage difference between two ends of the resistor is less than or equal to a first voltage threshold, control the first switch to be turned on.

According to this solution, first, the resistor is connected in parallel to the first switch. Therefore, when the first switch is turned on and the capacitor is charged or discharged, the resistor can limit a charging current or a discharging current of the capacitor, and a current flowing through the capacitor is small, so that impact on another component that is in the charging module and that is grounded with the capacitor can be reduced, and reliability of the charging module can be improved. In addition, compared with a charging module including three soft-start resistors and three relays, the charging module provided in this embodiment of this application includes one resistor and two switches, so that the charging module has a simpler structure and lower costs. Second, the controller turns on the first switch when a voltage difference between two ends of the first switch is small, so that interference to a component in a circuit with a weak voltage regulation capability in the charging module can be reduced, a probability of component failure and disorder can be reduced, and thus the reliability of the charging module is higher.

With reference to the first aspect, in an implementation, the controller is further configured to: after controlling the first switch to be turned on, when an absolute value of a voltage difference between two ends of a second switch in the two switches is less than or equal to a second voltage threshold, control the second switch to be turned on.

According to this solution, the controller turns on the second switch when the voltage difference between the two ends of the second switch is small, so that interference to a component in a circuit with a weak voltage regulation capability in the charging module can be reduced, a probability of component failure and disorder can be reduced, thus, reliability of the charging module is higher, and an output voltage and output power of the charging module can be increased.

With reference to the first aspect, in an implementation, the AC-DC power conversion circuit includes three phase rectifier circuits. Input ends of the three phase rectifier circuits are the three input ends of the AC-DC power conversion circuit, output ends of the three phase rectifier circuits are connected in parallel, and the output ends of the three phase rectifier circuits are an output end of the AC-DC power conversion circuit. The controller is further configured to: after controlling the first switch to be turned on and before controlling the second switch to be turned on, control a rectifier circuit that is in the three phase rectifier circuits and that is connected to the second switch not to work, and control the other rectifier circuits that are in the three phase rectifier circuits and that are not connected to the second switch to work, so that a voltage at the output end of the AC-DC power conversion circuit is greater than or equal to a third voltage threshold.

According to this solution, if one phase alternating current output by an output end that is connected to the second switch and that is of the alternating current power supply is unbalanced with the other two phase alternating currents output by the alternating current power supply, the voltage at the output end of the AC-DC power conversion circuit is high because the voltage at the output end of the AC-DC power conversion circuit is greater than or equal to the third voltage threshold before the second switch is turned on. When the second switch is turned on, the impact of the alternating current output by the output end that is connected to the second switch and that is of the alternating current power supply on the voltage at the output end of the AC-DC power conversion circuit can be reduced, and thus the reliability of the charging module is higher.

With reference to the first aspect, in an implementation, the controller is further configured to: when it is determined that the voltage at the output end of the AC-DC power conversion circuit is greater than or equal to the third voltage threshold, control the second switch to be turned on.

According to this solution, impact of the alternating current output by the output end that is connected to the second switch and that is of the alternating current power supply on the voltage at the output end of the AC-DC power conversion circuit can be reduced, and thus reliability of the charging module is higher.

With reference to the first aspect, in an implementation, the controller is further configured to: when duration in which the voltage at the output end of the AC-DC power conversion circuit is greater than or equal to the third voltage threshold is greater than or equal to a preset time threshold, control the second switch to be turned on.

According to this solution, impact of the alternating current output by the output end that is connected to the second switch and that is of the alternating current power supply on the voltage at the output end of the AC-DC power conversion circuit can be reduced, and thus reliability of the charging module is higher.

According to a second aspect of embodiments of this application, a charging module control method is provided. The method is applied to a charging module. The charging module includes a resistor, an AC-DC power conversion circuit, and two switches. Three input ends of the AC-DC power conversion circuit are respectively configured to connect to three phase output ends of an alternating current power supply in a one-to-one correspondence manner, the three input ends of the AC-DC power conversion circuit are further separately configured to connect to a ground end via capacitors, the two switches are respectively disposed between two input ends of the AC-DC power conversion circuit and two corresponding phase output ends of the alternating current power supply, and the resistor is connected in parallel to a first switch in the two switches. The method includes: when an absolute value of a voltage difference between two ends of the resistor is less than or equal to a first voltage threshold, controlling the first switch to be turned on.

With reference to the second aspect, in an implementation, the method further includes: after controlling the first switch to be turned on, when an absolute value of a voltage difference between two ends of a second switch in the two switches is less than or equal to a second voltage threshold, controlling the second switch to be turned on.

With reference to the second aspect, in an implementation, the AC-DC power conversion circuit includes three phase rectifier circuits. Input ends of the three phase rectifier circuits are the three input ends of the AC-DC power conversion circuit, output ends of the three phase rectifier circuits are connected in parallel, and the output ends of the three phase rectifier circuits are an output end of the AC-DC power conversion circuit. The method further includes: after controlling the first switch to be turned on and before controlling the second switch to be turned on, controlling a rectifier circuit that is in the three phase rectifier circuits and that is connected to the second switch not to work, and controlling the other rectifier circuits that are in the three phase rectifier circuits and that are not connected to the second switch to work, so that a voltage at the output end of the AC-DC power conversion circuit is greater than or equal to a third voltage threshold.

With reference to the second aspect, in an implementation, the method further includes: when it is determined that the voltage at the output end of the AC-DC power conversion circuit is greater than or equal to the third voltage threshold, controlling the second switch to be turned on.

With reference to the second aspect, in an implementation, the method further includes: when duration in which the voltage at the output end of the AC-DC power conversion circuit is greater than or equal to the third voltage threshold is greater than or equal to a preset time threshold, controlling the second switch to be turned on.

According to a third aspect of embodiments of this application, a charging device is provided. The charging device includes a plurality of charging modules and at least one charging connector, the charging module is configured to convert an alternating current into a direct current, and the charging connector is configured to connect to a vehicle. The charging module includes a controller, a resistor, an AC-DC power conversion circuit, and two switches. Three input ends of the AC-DC power conversion circuit are respectively configured to connect to three phase output ends of an alternating current power supply in a one-to-one correspondence manner, the three input ends of the AC-DC power conversion circuit are further separately configured to connect to a ground end via capacitors, the two switches are respectively disposed between two input ends of the AC-DC power conversion circuit and two corresponding phase output ends of the alternating current power supply, and the resistor is connected in parallel to a first switch in the two switches. The controller is configured to: when an absolute value of a voltage difference between two ends of the resistor is less than or equal to a first voltage threshold, control the first switch to be turned on.

With reference to the third aspect, in an implementation, the controller is further configured to: after controlling the first switch to be turned on, when an absolute value of a voltage difference between two ends of a second switch in the two switches is less than or equal to a second voltage threshold, control the second switch to be turned on.

With reference to the third aspect, in an implementation, the AC-DC power conversion circuit includes three phase rectifier circuits. Input ends of the three phase rectifier circuits are the three input ends of the AC-DC power conversion circuit, output ends of the three phase rectifier circuits are connected in parallel, and the output ends of the three phase rectifier circuits are an output end of the AC-DC power conversion circuit. The controller is further configured to: after controlling the first switch to be turned on and before controlling the second switch to be turned on, control a rectifier circuit that is in the three phase rectifier circuits and that is connected to the second switch not to work, and control the other rectifier circuits that are in the three phase rectifier circuits and that are not connected to the second switch to work, so that a voltage at the output end of the AC-DC power conversion circuit is greater than or equal to a third voltage threshold.

With reference to the third aspect, in an implementation, the controller is further configured to: when it is determined that the voltage at the output end of the AC-DC power conversion circuit is greater than or equal to the third voltage threshold, control the second switch to be turned on.

With reference to the third aspect, in an implementation, the controller is further configured to: when duration in which the voltage at the output end of the AC-DC power conversion circuit is greater than or equal to the third voltage threshold is greater than or equal to a preset time threshold, control the second switch to be turned on.

For descriptions of the second aspect and the third aspect in this application, refer to the detailed descriptions of the first aspect. In addition, for beneficial effects of the second aspect and the third aspect, refer to the beneficial effect analysis of the first aspect. Details are not described herein again.

### BRIEF DESCRIPTION OF DRAWINGS

FIG. 1 is a schematic of a circuit topology of a charging module;
FIG. 2(a) and FIG. 2(b) are a diagram of an application scenario of a charging module according to an embodiment of this application;
FIG. 3 is a diagram of another application scenario of a charging module according to an embodiment of this application;
FIG. 4 is a schematic of a circuit topology of a charging module according to an embodiment of this application;
FIG. 5 is a schematic of another circuit topology of a charging module according to an embodiment of this application;
FIG. 6 is a schematic flowchart of a charging module control method according to an embodiment of this application; and
FIG. 7 is a schematic flowchart of another charging module control method according to an embodiment of this application.

### DESCRIPTION OF EMBODIMENTS

The making and using of embodiments are discussed in detail below. It should be appreciated, however, that many applicable inventive concepts provided in this application may be implemented in a plurality of specific environments. The discussed specific embodiments are merely used to describe specific manners to implement and use this specification and this technology, and do not limit the scope of this application.

Unless otherwise defined, all technical terms used in this specification have the same meanings as those commonly known to a person of ordinary skill in the art.

Circuits or other components may be described as or referred to as "configured to" perform one or more tasks. In this case, the term "configured to" is used for implying a structure by indicating that a circuit/component includes a structure (for example, a circuit system) that performs one or more tasks during an operation. Therefore, even when a specified circuit/component is currently not operable (for example, not started), the circuit/component may also be referred to as being configured to perform the task. Circuits/components used in conjunction with the "configured to" phrase include hardware, for example, a circuit for performing an operation.

The following describes the technical solutions in embodiments of this application with reference to the accompanying drawings in embodiments of this application. In this application, "at least one" refers to one or more, and "a plurality of" refers to two or more. A character "/" generally represents an "or" relationship between associated objects. "At least one of the following items (pieces)" or a similar expression thereof indicates any combination of these items, including a single item (piece) or any combination of a plurality of items (pieces). For example, at least one of a, b, or c may represent: a, b, c, a and b, a and c, b and c, or a, b, and c, where a, b, and c may be singular or plural. In addition, in embodiments of this application, terms such as "first" and "second" do not limit a quantity or an order.

Before embodiments of this application are described, the background of this application is first described.

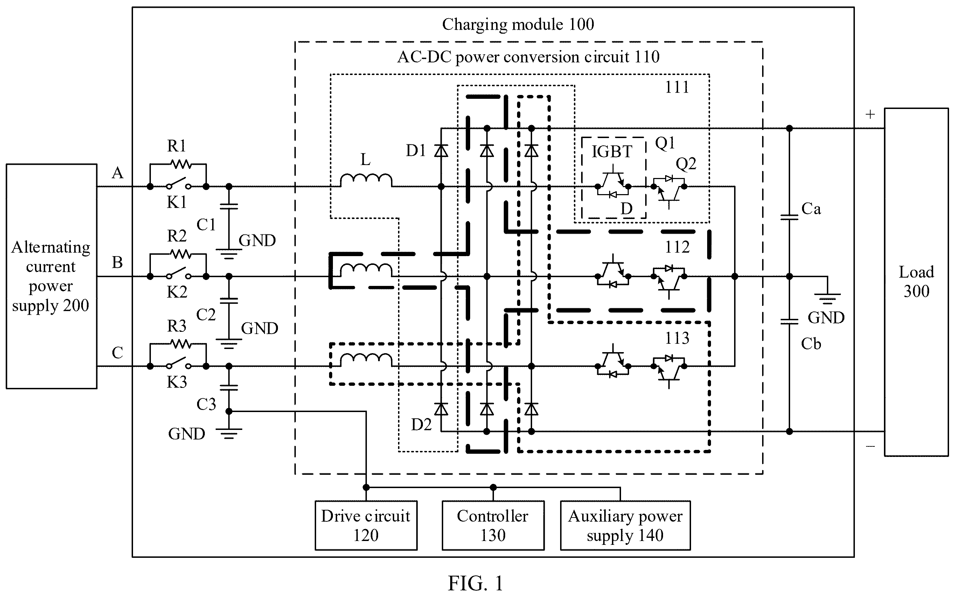

FIG. 1 is a schematic of a circuit topology of a charging module 100. The charging module 100 includes an AC-DC power conversion circuit 110 and three relays (K1, K2, and K3).

Refer to FIG. 1. One end of each of the three relays (K1, K2, and K3) is respectively configured to connect to three phase output ends (A, B, and C) of an alternating current power supply 200 in a one-to-one correspondence manner, and the other end of each of the three relays (K1, K2, and K3) is respectively connected to three input ends of the AC-DC power conversion circuit 110 in a one-to-one correspondence manner. The three input ends of the AC-DC power conversion circuit 110 are further separately configured to connect to a ground (ground, GND) end via capacitors (C1, C2, and C3). An output end of the AC-DC power conversion circuit 110 is configured to connect to a load 300, so that the AC-DC power conversion circuit 110 can supply power to the load 300.

Still refer to FIG. 1. The AC-DC power conversion circuit 110 includes three phase rectifier circuits (111, 112, and 113). Input ends of the three phase rectifier circuits (111, 112, and 113) are the three input ends of the AC-DC power conversion circuit 110, output ends of the three phase rectifier circuits (111, 112, and 113) are connected in parallel, and the output ends of the three phase rectifier circuits (111, 112, and 113) are an output end of the AC-DC power conversion circuit 110. The output end of the AC-DC power conversion circuit 110 includes a positive output end and a negative output end.

Still refer to FIG. 1. The charging module 100 may further include a capacitor branch disposed between the output ends of the AC-DC power conversion circuit 110. The capacitor branch includes a capacitor Ca and a capacitor Cb that are connected in series. A connection point of the capacitor Ca and the capacitor Cb is connected to a ground end. Each rectifier circuit includes an inductor, a switching transistor bridge arm, and a diode bridge arm that is disposed between the output ends of the AC-DC power conversion circuit 110. The rectifier circuit 111 is used as an example. An inductor L is disposed between an input end of the rectifier circuit 111 and a midpoint of a diode bridge arm, and a switching transistor bridge arm is disposed between the midpoint of the diode bridge arm and a midpoint of the capacitor branch. The switching transistor bridge arm includes a first switch transistor Q1 and a second switching transistor Q2 that are connected in series. A drain or a collector of the first switching transistor Q1 is connected to a drain or a collector of the second switching transistor Q2, or a source or an emitter of the first switching transistor Q1 is connected to a source or an emitter of the second switching transistor Q2, so that the switching transistor bridge arm can be completely turned off. The diode bridge arm includes a first diode D1 and a second diode D2 that are connected in series. A cathode of the first diode D1 is connected to the positive output end of the AC-DC power conversion circuit 110, and an anode of the second diode D2 is connected to the negative output end of the AC-DC power conversion circuit 110. The diode bridge arm is configured to rectify a single-phase alternating current (a phase-A alternating current) output by the alternating current power supply 200 into a direct current. The switching transistor bridge arm is controlled to be turned on and off, so that a circuit including the inductor L, the diode bridge arm, and the switching transistor bridge arm can implement boost. For details, refer to a boost (boost) circuit and the conventional technology. Details are not described herein again in embodiments of this application.

In an implementation, the first switching transistor Q1, the second switching transistor Q2, and the switching transistors in embodiments of this application may include a transistor or a transistor and a diode. This is not limited in embodiments of this application. Specifically, each switching transistor may include a metal-oxide-semiconductor field-effect transistor (metal-oxide-semiconductor field-effect transistor, MOSFET). The metal-oxide-semiconductor field-effect transistor may also be referred to as a MOS for short. Each MOS includes a reversely-biased body diode. Alternatively, refer to FIG. 1. The first switching transistor Q1 in FIG. 1 is used as an example. Each switching transistor may include an insulated gate bipolar transistor (insulated gate bipolar transistor, IGBT) and a diode D. A collector of the IGBT is connected to a negative electrode of the diode D, and an emitter of the IGBT is connected to a positive electrode of the diode D. In this embodiment of this application, an example in which each switching transistor includes an IGBT and a diode D is used for description.

Still refer to FIG. 1. The charging module 100 may further include three resistors (R1, R2, and R3). The three resistors (R1, R2, and R3) may be referred to as soft-start resistors. The three resistors (R1, R2, and R3) are respectively connected in parallel to the three relays (K1, K2, and K3) in a one-to-one correspondence manner. The three resistors (R1, R2, and R3) are configured to limit charging currents or discharging currents of the three capacitors (C1, C2, and C3). Specifically, the three resistors (R1, R2, and R3) are configured to delay an increase speed of the charging currents of the three capacitors (C1, C2, and C3) before the three relays (K1, K2, and K3) are turned on, are further configured to limit initial charging currents of the three capacitors (C1, C2, and C3) at a moment at which the three relays (K1, K2, and K3) are turned on, and are further configured to: when the three capacitors (C1, C2, and C3) have inconsistent voltages due to unbalanced three phase alternating currents of the alternating current power supply 200 before the three relays (K1, K2, and K3) are turned on, limit flowing of a discharging current from a capacitor with a high voltage to a capacitor with a low voltage. Therefore, when the three relays (K1, K2, and K3) are turned on and the three capacitors (C1, C2, and C3) are charged or discharged, currents flowing through the three capacitors (C1, C2, and C3) are small, so that impact on another component that is in the charging module 100 and that is grounded with the three capacitors (C1, C2, and C3) can be reduced, and reliability of the charging module 100 can be improved. For example, refer to FIG. 1. The charging module 100 may further include a drive circuit 120, a controller 130, and an auxiliary power supply 140 that are grounded with the three capacitors (C1, C2, and C3). According to the charging module 100, the three resistors (R1, R2, and R3) are disposed, and when the three relays (K1, K2, and K3) are turned on and the three capacitors (C1, C2, and C3) are charged or discharged, the currents flowing through the three capacitors (C1, C2, and C3) are small, so that impact on the drive circuit 120, the controller 130, and the auxiliary power supply 140 can be reduced.

However, disposing the three resistors (R1, R2, and R3) in the charging module 100 causes a complex structure and high costs of the charging module 100. In addition, the three resistors (R1, R2, and R3) are disposed in the charging module 100, and consequently, there may still be a large voltage difference between two ends of the relay before the relay is turned on. In this case, turning on the relay may cause interference to a component in a circuit with a weak voltage regulation capability in the charging module 100, which may result in component failure and disorder. For example, interference may be caused to a component in the auxiliary power supply 140, which may result in component failure and disorder in the auxiliary power supply 140 and result in low reliability of the charging module 100.

In view of this, an embodiment of this application provides a charging module. The charging module includes one soft-start resistor and two switches. Compared with the charging module 100 that includes the three soft-start resistors (R1, R2, and R3) and the three relays (K1, K2, and K3), the charging module has a simpler structure and lower costs. In addition, the switch is turned on when a voltage difference between two ends of the switch is small, so that interference to a component in a circuit with a weak voltage regulation capability in the charging module can be reduced, a probability of component failure and disorder can be reduced, and thus reliability of the charging module is higher.

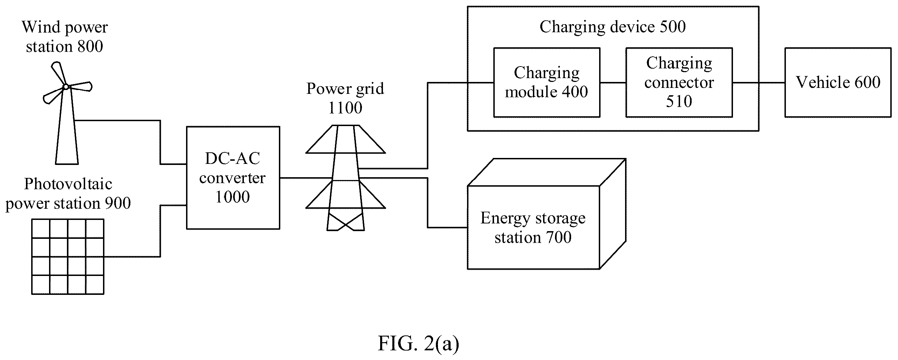

As shown in FIG. 2(a), a charging module 400 provided in an embodiment of this application may be used as an independent device.

FIG. 2(a) is a diagram of an application scenario of the charging module 400 according to an embodiment of this application. The charging module 400 may be used in a charging device 500. The charging device 500 further includes a charging connector 510. An output end of the charging module 400 is connected to an input end of the charging connector 510, and an output end of the charging connector 510 is configured to connect to a vehicle 600, to supply power to the vehicle 600. Alternatively, as shown in FIG. 2(a), the charging module 400 may be used in an energy storage station 700.

Still refer to FIG. 2(a). A wind power station 800 and a photovoltaic power station 900 may be connected to a power grid 1100 via a direct current to alternating current (direct current to alternating current, DC-AC) converter 1000. The power grid 1100 is connected to the charging device 500 and the energy storage station 700. Therefore, a direct current output by the wind power station 800 and the photovoltaic power station 900 may be converted into an alternating current via the DC-AC converter 1000, and the alternating current is transmitted to the charging device 500 and the energy storage station 700 via the power grid 1100.

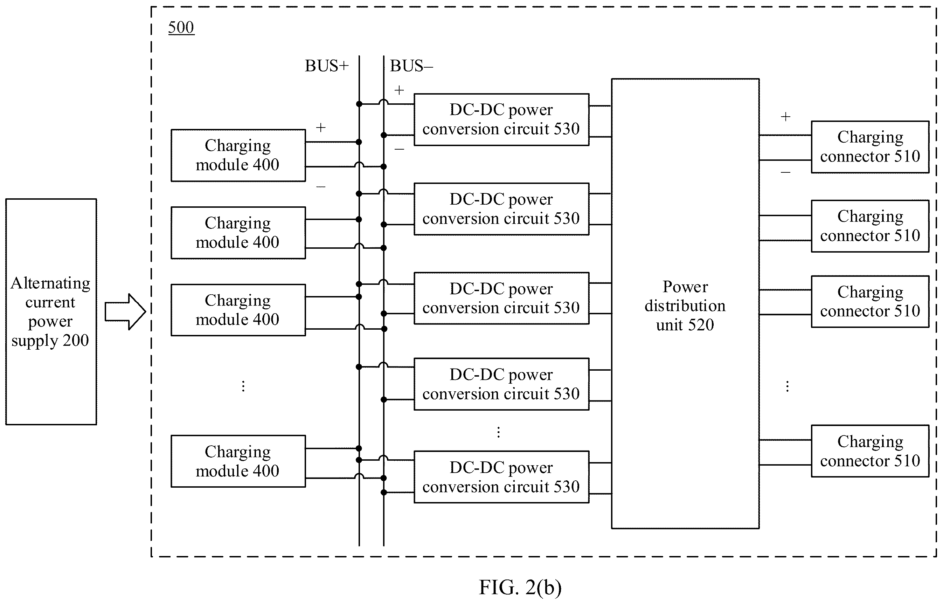

FIG. 2(b) is a diagram of another application scenario of the charging module 400 according to an embodiment of this application. When the charging module 400 is used in the charging device 500, the charging device 500 may include a direct current bus BUS, a power distribution unit 520, at least one charging module 400, at least one direct current to direct current (direct current to direct current, DC-DC) power conversion circuit 530, and at least one charging connector 510. The direct current bus BUS includes a positive direct current bus BUS+ and a negative direct current bus BUS-. An input end of the at least one charging module 400 is configured to connect to an alternating current power supply 200, an output end of the at least one charging module 400 is connected to the direct current bus BUS, an input end of the at least one DC-DC power conversion circuit 530 is connected to the direct current bus BUS, an output end of the at least one DC-DC power conversion circuit 530 is connected to an input end of the power distribution unit 520, and an output end of the power distribution unit 520 is connected to an input end of the at least one charging connector 510.

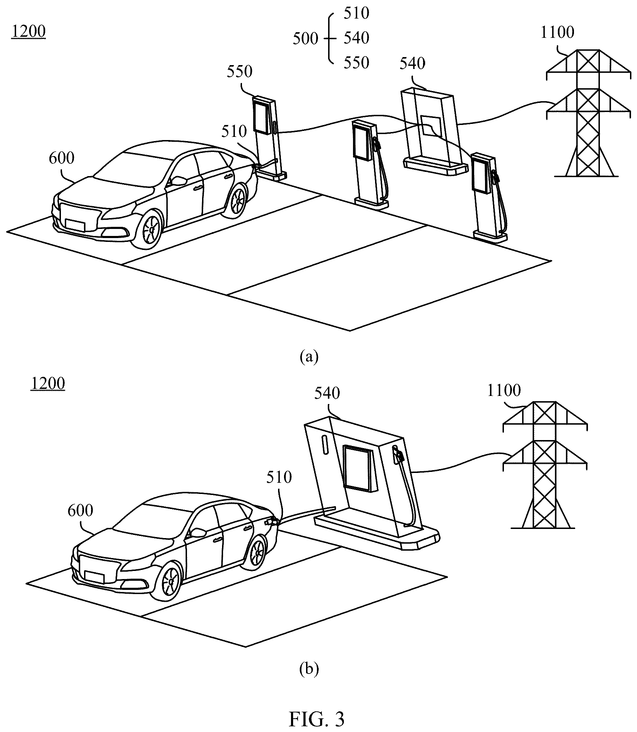

In an implementation, as shown in FIG. 2(a) or FIG. 2(b), when the charging module 400 provided in this embodiment of this application is used in the charging device 500, as shown in (a) and (b) in FIG. 3, the charging device 500 may be used in a charging system 1200. The charging system 1200 further includes a vehicle 600 connected to the charging device 500. The vehicle 600 may also be referred to as an electric vehicle. The electric vehicle is a transportation means driven by electric energy to travel. Types of electric vehicles include a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), or a plug-in hybrid electric vehicle (plug-in hybrid electric vehicle, PHEV). A specific type of the electric vehicle is not limited in embodiments of this application.

The charging device 500 is configured to: receive the alternating current output by the power grid 1100, rectify the alternating current, and transmit the rectified alternating current to the vehicle 600, to charge the vehicle 600. Alternatively, the vehicle 600 may reversely output electric energy to the power grid 1100 via the charging device 500.

In an implementation, as shown in (a) in FIG. 3, the charging device 500 is a split-type charging device. Specifically, the charging device 500 includes a power unit 540, a plurality of charging terminals 550, and a plurality of charging connectors 510. The power unit 540 is connected to each charging terminal 550, each charging terminal 550 is connected to at least one charging connector 510, and each charging connector 510 is configured to connect to a vehicle 600. In an implementation, one charging terminal 550 may be connected to at least two charging connectors 510, and the at least two charging connectors 510 may be connected to one vehicle 600. This is not limited in embodiments of this application.

The charging module 400, the power distribution unit 520, and the DC-DC power conversion circuit 530 may be disposed in the power unit 540 or the charging terminal 550. This is not limited in embodiments of this application. In this embodiment of this application, an example in which the charging module 400 is disposed in the power unit 540 is used for description. The charging module 400 in the power unit 540 is configured to: convert the alternating current output by the power grid 1100 into a direct current, and then transmit the direct current to the vehicle 600 via the charging terminal 550 and the charging connector 510.

The charging terminal 550 includes a housing, a human-machine interaction interface, a charging control unit, a metering and billing unit, and the like, and is configured to perform information exchange, energy transmission, metering and billing, and the like with the vehicle 600.

In an implementation, as shown in (b) in FIG. 3, the charging device 500 is an integral charging device. Specifically, a human-machine interaction interface, a charging control unit, a metering and billing unit, and the like in the charging device 500 are directly disposed in a power unit 540, and the charging module 400 is also disposed in the power unit 540. Compared with the charging device 500 shown in (a) in FIG. 3, the charging device 500 includes the power unit 540 and at least one charging connector 510 connected to the power unit 540, but does not include a charging terminal 550.

The charging module 400 in the power unit 540 is configured to: convert an alternating current output by a power grid 1100 into a direct current, and then directly transmit the direct current to a vehicle 600 via the charging connector 510.

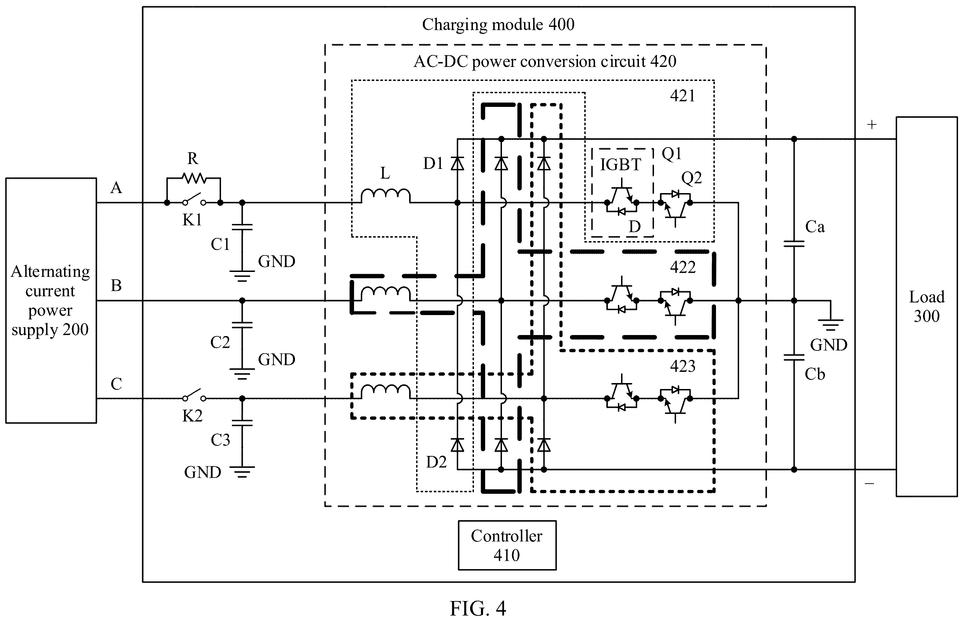

FIG. 4 is a schematic of a circuit topology of a charging module 400 according to an embodiment of this application. The charging module 400 includes a controller 410, a resistor R, an AC-DC power conversion circuit 420, and two switches (K1 and K2). Refer to FIG. 4. Three input ends of the AC-DC power conversion circuit 420 are respectively configured to connect to three phase output ends (A, B, and C) of an alternating current power supply in a one-to-one correspondence manner. The three input ends of the AC-DC power conversion circuit 420 are further separately configured to connect to a ground end via capacitors (C1, C2, and C3). An output end of the AC-DC power conversion circuit 420 is configured to connect to a load 300, to supply power to the load 300. The two switches are respectively disposed between two input ends of the AC-DC power conversion circuit 420 and two corresponding phase output ends of the alternating current power supply 200. The resistor R is connected in parallel to a first switch K1 in the two switches. The resistor R may also be referred to as a soft-start resistor. Specific disposing locations of the two switches (K1 and K2) are not limited in embodiments of this application. Refer to FIG. 4. In this embodiment of this application, an example in which the first switch K1 is disposed between one input end of the AC-DC power conversion circuit 420 and the phase-A output end of the alternating current power supply 200, and the second switch K2 is disposed between another input end of the AC-DC power conversion circuit 420 and the phase-C output end of the alternating current power supply 200 is used for description.

In an implementation, the two switches (K1 and K2) include a relay or a contactor. Specific types of the two switches (K1 and K2) are not limited in embodiments of this application.

Still refer to FIG. 4. When the controller 410 controls the two switches (K1 and K2) to be turned off, and controls switching transistors in the AC-DC power conversion circuit 420 to be turned off, a phase-A alternating current output by the phase-A output end of the alternating current power supply 200 and a phase-B alternating current output by the phase-B output end of the alternating current power supply 200 provide electric energy for the output end of the AC-DC power conversion circuit 420 via the resistor R, to increase a voltage at the output end of the AC-DC power conversion circuit 420. In this case, a voltage between two ends of the resistor R is a voltage between the phase-A alternating current output by the alternating current power supply 200 and the phase-B alternating current output by the alternating current power supply 200. The voltage between the two ends of the resistor R is equal to a line voltage between the phase-A alternating current and the phase-B alternating current.

The controller 410 is configured to detect an absolute value Va of a voltage difference between the two ends of the resistor R; and when the absolute value Va of the voltage difference between the two ends of the resistor R is less than or equal to a first voltage threshold V1, the controller 410 controls the first switch K1 to be turned on, and controls the second switch K2 in the two switches (K1 and K2) to be turned off. A specific value of the first voltage threshold V1 is not limited in embodiments of this application. For example, the first voltage threshold V1 may be a value close to 0.

In an implementation, the voltage between the two ends of the resistor R is equal to the line voltage between the phase-A alternating current and the phase-B alternating current, so that the controller 410 can detect the absolute value Va of the voltage difference between the two ends of the resistor R, or may detect the line voltage between the phase-A alternating current and the phase-B alternating current. Either of the absolute value Va and the line voltage may be detected, and detecting the absolute value Va and detecting the line voltage have same effect. This is not limited in embodiments of this application.

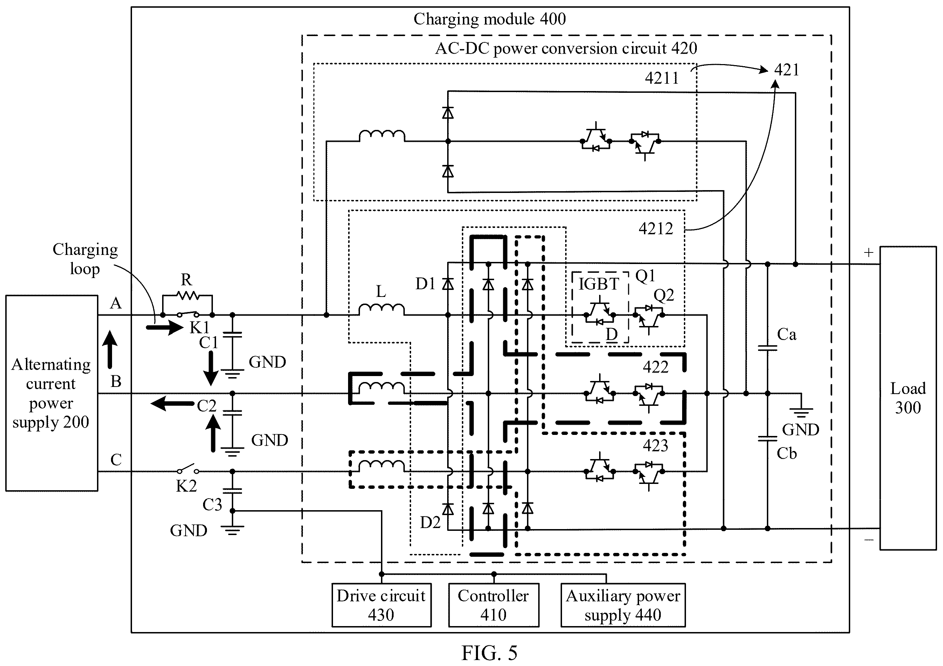

It can be understood that, first, the resistor R is disposed, when the controller 410 controls the first switch K1 to be turned on and the second switch K2 to be turned off, for the phase-A alternating current and the phase-B alternating current output by the alternating current power supply 200 to provide electric energy for the AC-DC power conversion circuit 420 via the first switch K1 to increase the voltage at the output end of the AC-DC power conversion circuit 420, the charging loop of the first capacitor C1 and the second capacitor C2 in the charging module 400 may be the charging loop shown in FIG. 5. The resistor R may delay a rising speed of a charging current of the first capacitor C1 and a charging current of the second capacitor C2 before the first switch K1 is turned on. The resistor R may further limit an initial charging current of the first capacitor C1 and an initial charging current of the second capacitor C2 at the instant when the first switch K1 is turned on. The resistor R may further limit, before the first switch K1 is turned on, flowing of a discharging current of a capacitor with a high voltage flowing to a capacitor with a low voltage when the phase-A alternating current and the phase-B alternating current output by the alternating current power supply 200 are unbalanced and a voltage of the first capacitor C1 and a voltage of the second capacitor C2 are inconsistent. Therefore, when the first switch K1 is turned on and the first capacitor C1 and the second capacitor C2 are charged or discharged, currents flowing through the first capacitor C1 and the second capacitor C2 are small, so that impact on another component that is in the charging module 400 and that is grounded with the first capacitor C1 and the second capacitor C2 can be reduced, and reliability of the charging module 400 can be improved. For example, refer to FIG. 5. In addition to the controller 410 that is grounded with the three capacitors (C1, C2, and C3) in the charging module 400, the charging module 400 may further include a drive circuit 430 and an auxiliary power supply 440 that are grounded with the three capacitors (C1, C2, and C3). The resistor R is disposed, and when the first switch K1 is turned on and the first capacitor C1 and the second capacitor C2 are charged or discharged, the currents flowing through the first capacitor C1 and the second capacitor C2 are small, so that impact on the controller 410, the drive circuit 430, and the auxiliary power supply 440 can be reduced, and the reliability of the charging module 400 can be improved.

Second, when the absolute value Va of the voltage difference between the two ends of the resistor R is less than or equal to the first voltage threshold V1, the controller 410 controls the first switch K1 to be turned on, and controls the second switch K2 to be turned off, and when a voltage difference between two ends of the first switch K1 is small, the first switch K1 is turned on, so that interference to a component in a circuit with a weak voltage regulation capability in the charging module 400 can be reduced, a probability of component failure and disorder can be reduced, and the reliability of the charging module 400 can be further improved. For example, refer to FIG. 5. When the absolute value Va of the voltage difference between the two ends of the resistor R is less than or equal to the first voltage threshold V1, the controller 410 controls the first switch K1 to be turned on, and controls the second switch K2 to be turned off, and turns on the first switch K1 when the voltage difference between the two ends of the first switch K1 is small, so that interference to a component in the auxiliary power supply 440 with a weak voltage regulation capability in the charging module 400 can be reduced, a probability of component failure and disorder in the auxiliary power supply 440 can be reduced, and the reliability of the charging module 400 can be improved.

In an implementation, as shown in FIG. 4, the AC-DC power conversion circuit 420 includes three phase rectifier circuits (421, 422, and 423). Input ends of the three phase rectifier circuits (421, 422, and 423) are the three input ends of the AC-DC power conversion circuit 420, output ends of the three phase rectifier circuits (421, 422, and 423) are connected in parallel, and the output ends of the three phase rectifier circuits (421, 422, and 423) are the output end of the AC-DC power conversion circuit 420.

In an implementation, each phase rectifier circuit in the three phase rectifier circuits (421, 422, and 423) may be a rectifier boost circuit or may be a rectifier buck circuit. This is not limited in embodiments of this application. In this embodiment of this application, an example in which each phase rectifier circuit is a rectifier boost circuit is used for description.

Refer to FIG. 4. The output end of the AC-DC power conversion circuit 420 includes a positive output end and a negative output end. The charging module 400 further includes a capacitor branch disposed between the output ends of the AC-DC power conversion circuit 420. The capacitor branch includes a capacitor Ca and a capacitor Cb that are connected in series. A connection point of the capacitor Ca and the capacitor Cb is connected to a ground end. Each phase rectifier circuit includes an inductor, a switching transistor bridge arm, and a diode bridge arm that is disposed between the output ends of the AC-DC power conversion circuit 420. A specific circuit topology of each phase rectifier circuit is the same as the circuit topology of the rectifier circuit 111 in the charging module 100. For descriptions of the circuit topology of each phase rectifier circuit, refer to the related descriptions of the circuit topology of the rectifier circuit 111. Details are not described herein again in embodiments of this application. The specific circuit topology of each phase rectifier circuit is not limited in embodiments of this application. In this embodiment of this application, an example in which the circuit topology of each phase rectifier circuit is a circuit topology of the rectifier circuit shown in FIG. 4 is used for description.

In an implementation, each phase rectifier circuit in the three phase rectifier circuits (421, 422, and 423) may include a plurality of rectifier circuits connected in parallel. Refer to FIG. 5. The rectifier circuit 421 is used as an example. The phase rectifier circuit 421 may include a rectifier circuit 4211 and a rectifier circuit 4212 connected in parallel. A circuit topology of each of the two rectifier circuits may be the same as the circuit topology of the rectifier circuit 421 in FIG. 4. Switching transistors in the two rectifier circuits are synchronously turned on and off, so that the two rectifier circuits can implement the function of the rectifier circuit 421 in FIG. 4. A specific quantity of rectifier circuits included in each phase rectifier circuit is not limited in embodiments of this application.

According to the charging module 400 provided in this embodiment of this application, first, the resistor R is connected in parallel to the first switch K1. Therefore, when the first switch K1 is turned on and the first capacitor C1 and the second capacitor C2 are charged or discharged, the resistor R can limit charging currents or discharging currents of the first capacitor C1 and the second capacitor C2, and currents flowing through the first capacitor C1 and the second capacitor C2 are small, so that impact on another component that is in the charging module 400 and that is grounded with the first capacitor C1 and the second capacitor C2 can be reduced, and reliability of the charging module 400 can be improved. In addition, compared with the charging module 100 that includes the three soft-start resistors (R1, R2, and R3) and the three relays (K1, K2, and K3), the charging module 400 provided in this embodiment of this application includes the resistor R and the two switches (K1 and K2), so that the charging module 400 has a simpler structure and lower costs. Second, the controller 410 turns on the first switch K1 when a voltage difference between two ends of the first switch K1 is small, so that interference to a component in a circuit with a weak voltage regulation capability in the charging module 400 can be reduced, a probability of component failure and disorder can be reduced, and thus the reliability of the charging module 400 is higher.

Still refer to FIG. 5. When the controller 410 controls the first switch K1 to be turned on and the second switch K2 to be turned off, and controls switching transistors in the three phase rectifier circuits (421, 422, and 423) to be turned off, the phase-A alternating current and the phase-B alternating current output by the alternating current power supply 200 provide electric energy for the AC-DC power conversion circuit 420 via the first switch K1, to increase the voltage at the output end of the AC-DC power conversion circuit 420. In this case, a voltage between two ends of the second switch K2 is a voltage between the phase-C alternating current output by the alternating current power supply 200 and a midpoint of the capacitor branch, the voltage between the two ends of the second switch K2 of is equal to a phase voltage of the phase C, and the midpoint of the capacitor branch is the connection point between the capacitor Ca and the capacitor Cb.

In an implementation, the controller 410 is further configured to: after controlling the first switch K1 to be turned on, detect an absolute value Vb of a voltage difference between the two ends of the second switch K2, and control the second switch K2 to be turned on when the absolute value Vb of the voltage difference between the two ends of the second switch K2 is less than or equal to a second voltage threshold V2. A specific value of the second voltage threshold V2 is not limited in embodiments of this application. For example, the second voltage threshold V2 may be a value close to 0.

It may be understood that the controller 410 turns on the second switch K2 when the voltage difference between the two ends of the second switch K2 is small, so that interference to a component in a circuit with a weak voltage regulation capability in the charging module 400 can be reduced, a probability of component failure and disorder can be reduced, and the reliability of the charging module 400 can be improved. For example, refer to FIG. 5. After controlling the first switch K1 to be turned on, when the absolute value Vb of the voltage difference between the two ends of the second switch K2 is less than or equal to the second voltage threshold V2, the controller 410 controls the second switch K2 to be turned on, and turns on the second switch K2 when the voltage difference between the two ends of the second switch K2 is small, so that interference to a component in the auxiliary power supply 440 with a weak voltage regulation capability in the charging module 400 can be reduced, a probability of component failure and disorder in the auxiliary power supply 440 can be reduced, and the reliability of the charging module 400 can be improved. In addition, after controlling the first switch K1 to be turned on, the controller 410 controls the second switch K2 to be turned on, so that the three phase alternating currents output by the alternating current power supply 200 provide electric energy for the AC-DC power conversion circuit 420 via the first switch K1 and the second switch K2, to increase the voltage at the output end of the AC-DC power conversion circuit 420, thereby increasing an output voltage and output power of the charging module 400.

In an implementation, the voltage between the two ends of the second switch K2 is equal to the phase voltage of the phase C, so that the controller 410 can detect the absolute value Vb of the voltage difference between the two ends of the second switch K2, or may detect the phase voltage of the phase C. Either of the absolute value Vb and the phase voltage may be detected, and detecting the absolute value Vb and detecting the phase voltage have same effect. This is not limited in embodiments of this application.

According to the charging module 400 provided in this embodiment of this application, the controller 410 turns on the second switch K2 when the voltage difference between the two ends of the second switch K2 is small, so that the interference to the component in the circuit with the weak voltage regulation capability in the charging module 400 can be reduced, the probability of component failure and disorder can be reduced, the reliability of the charging module 400 can be improved, and the output voltage and the output power of the charging module 400 can be increased.

In an implementation, the three phase alternating currents output by the alternating current power supply 200 may be unbalanced. For example, the phase voltage of the phase-C alternating current output by the phase-C output end of the alternating current power supply 200 may be greater than a phase voltage of the phase-A alternating current and a phase voltage of the phase-B alternating current, and a difference is large. Alternatively, the phase voltage of the phase-C alternating current output by the alternating current power supply 200 may be less than a phase voltage of the phase-A alternating current and a phase voltage of the phase-B alternating current, and a difference is large. After controlling the first switch K1 to be turned on, the controller 410 controls the second switch K2 to be turned on when the phase-C alternating current output by the alternating current power supply 200 is unbalanced with the phase-A alternating current and the phase-B alternating current, and the phase-C alternating current impacts the voltage at the output end of the AC-DC power conversion circuit 420, resulting in poor reliability of the charging module 400.

The controller 410 is further configured to: after controlling the first switch K1 to be turned on and before controlling the second switch K2 to be turned on, control a rectifier circuit 423 that is in the three phase rectifier circuits (421, 422, and 423) and that is connected to the second switch K2 not to work, and control the other rectifier circuits (421 and 422) that are in the three phase rectifier circuits (421, 422, and 423) and that are not connected to the second switch K2 to work, so that the voltage at the output end of the AC-DC power conversion circuit 420 is greater than or equal to a third voltage threshold V3. A specific value of the third voltage threshold V3 is not limited in embodiments of this application.

In an implementation, the controller 410 is further configured to: when it is determined that the voltage at the output end of the AC-DC power conversion circuit 420 is greater than or equal to the third voltage threshold, control the second switch K2 to be turned on. Alternatively, the controller 410 is further configured to: when duration in which the voltage at the output end of the AC-DC power conversion circuit 420 is greater than or equal to the third voltage threshold V3 is greater than or equal to a preset time threshold, control the second switch K2 to be turned on. A specific value of the preset time threshold is not limited in embodiments of this application. In this way, impact of a phase-C alternating current output by an output end that is connected to the second switch K2 and that is of an alternating current power supply 200 on the voltage at the output end of the AC-DC power conversion circuit 420 can be reduced, and thus reliability of the charging module 400 is higher.

According to the charging module 400 provided in this embodiment of this application, if the phase-C alternating current output by the alternating current power supply 200 is unbalanced with the phase-A alternating current and the phase-B alternating current, the voltage at the output end of the AC-DC power conversion circuit 420 is high because the voltage at the output end of the AC-DC power conversion circuit 420 is greater than or equal to the third voltage threshold V3. When the second switch K2 is turned on, the impact of the phase-C alternating current output by the alternating current power supply 200 on the voltage at the output end of the AC-DC power conversion circuit 420 can be reduced, so that the reliability of the charging module 400 can be improved.

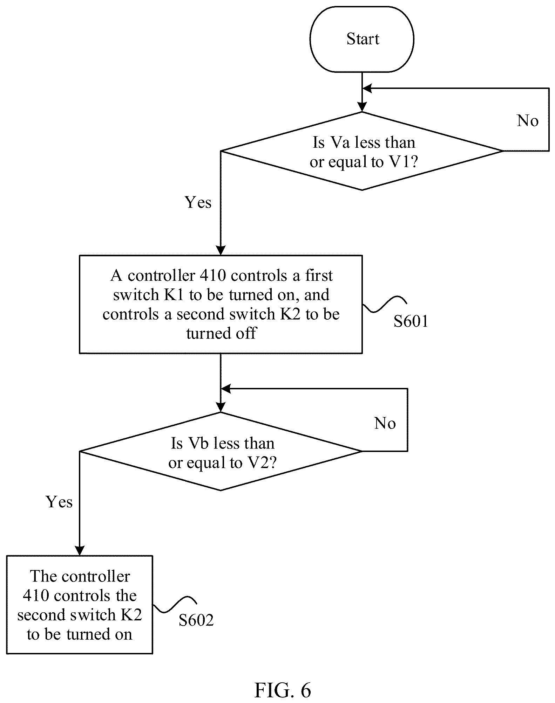

As shown in FIG. 6, an embodiment of this application further provides a charging module control method. The method is applied to the charging module 400. The method includes step S601.

S601: When an absolute value Va of a voltage difference between two ends of a resistor R is less than or equal to a first voltage threshold V1, a controller 410 controls a first switch K1 to be turned on, and controls a second switch K2 in two switches to be turned off. A specific value of the first voltage threshold V1 is not limited in embodiments of this application. For example, the first voltage threshold V1 may be a value close to 0.

According to the charging module control method provided in this embodiment of this application, the controller 410 turns on the first switch K1 when a voltage difference between two ends of the first switch K1 is small, so that interference to a component in a circuit with a weak voltage regulation capability in the charging module 400 can be reduced, a probability of component failure and disorder can be reduced, and thus reliability of the charging module 400 is higher.

In an implementation, as shown in FIG. 6, the charging module 400 control method provided in this embodiment of this application further includes step S602.

S602: After controlling the first switch K1 to be turned on, the controller 410 controls the second switch K2 to be turned on when an absolute value Vb of a voltage difference between two ends of the second switch K2 is less than or equal to a second voltage threshold V2. A specific value of the second voltage threshold V2 is not limited in embodiments of this application. For example, the second voltage threshold V2 may be a value close to 0.

According to the charging module control method provided in this embodiment of this application, the controller 410 turns on the second switch K2 when the voltage difference between the two ends of the second switch K2 is small, so that interference to a component in a circuit with a weak voltage regulation capability in the charging module 400 can be reduced, a probability of component failure and disorder can be reduced, reliability of the charging module 400 can be improved, and an output voltage and output power of the charging module 400 can be increased.

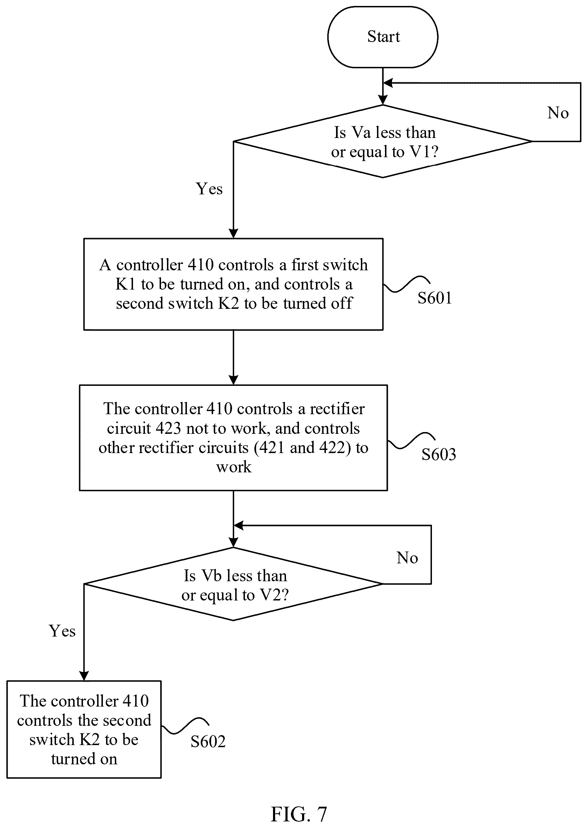

In an implementation, as shown in FIG. 7, the charging module 400 control method provided in this embodiment of this application further includes step S603 before step S602.

S603: The controller 410 is further configured to: after controlling the first switch K1 to be turned on and before controlling the second switch K2 to be turned on, control a rectifier circuit 423 that is in three phase rectifier circuits (421, 422, and 423) and that is connected to the second switch K2 not to work, and control the other rectifier circuits (421 and 422) that are in the three phase rectifier circuits (421, 422, and 423) and that are not connected to the second switch K2 to work, so that a voltage at an output end of an AC-DC power conversion circuit 420 is greater than or equal to a third voltage threshold V3. A specific value of the third voltage threshold V3 is not limited in embodiments of this application.

In an implementation, with reference to step S603, in step S602, that after controlling the first switch K1 to be turned on, the controller 410 controls the second switch K2 to be turned on when the absolute value Vb of the voltage difference between the two ends of the second switch K2 is less than or equal to the second voltage threshold V2 includes: The controller 410 controls the second switch K2 to be turned on when it is determined that the voltage at the output end of the AC-DC power conversion circuit 420 is greater than or equal to the third voltage threshold. Alternatively, the controller 410 controls the second switch K2 to be turned on when duration in which the voltage at the output end of the AC-DC power conversion circuit 420 is greater than or equal to the third voltage threshold V3 is greater than or equal to a preset time threshold. A specific value of the preset time threshold is not limited in embodiments of this application. In this way, impact of a phase-C alternating current output by an output end that is connected to the second switch K2 and that is of an alternating current power supply 200 on the voltage at the output end of the AC-DC power conversion circuit 420 can be reduced, and thus reliability of the charging module 400 is higher.

According to the charging module control method provided in this embodiment of this application, if the phase-C alternating current output by the alternating current power supply 200 is unbalanced with a phase-A alternating current and a phase-B alternating current, the voltage at the output end of the AC-DC power conversion circuit 420 is high because the voltage at the output end of the AC-DC power conversion circuit 420 is greater than or equal to the third voltage threshold V3. When the second switch K2 is turned on, the impact of the phase-C alternating current output by the alternating current power supply 200 on the voltage at the output end of the AC-DC power conversion circuit 420 can be reduced, so that the reliability of the charging module 400 can be improved.

Based on this, as shown in FIG. 2(a), an embodiment of this application further provides a charging device 500. The charging device 500 includes a charging module 400 and at least one charging connector 510. An output end of the charging module 400 is connected to an input end of the at least one charging connector 510. The charging module 400 is configured to convert an alternating current into a direct current. The charging connector 510 is configured to connect to a vehicle 600. A circuit topology of the charging module 400 is the circuit topology of the charging module 400 shown in FIG. 4 or FIG. 5. A circuit topology of the charging device 500 may also be the circuit topology of the charging device 500 shown in FIG. 2(b).

The detailed descriptions of the charging module 400 and the beneficial effect analysis above can be correspondingly referenced to the charging module control method and the charging device 500. Details are not described herein again in embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A charging module, wherein the charging module comprises a controller, a resistor, an AC-DC power conversion circuit, and two switches, three input ends of the AC-DC power conversion circuit are respectively configured to connect to three phase output ends of an alternating current power supply in a one-to-one correspondence manner, the three input ends of the AC-DC power conversion circuit are further separately configured to connect to a ground end via capacitors, the two switches are respectively disposed between two input ends of the AC-DC power conversion circuit and two corresponding phase output ends of the alternating current power supply, and the resistor is connected in parallel to a first switch in the two switches; and
the controller is configured to: when an absolute value of a voltage difference between two ends of the resistor is less than or equal to a first voltage threshold, control the first switch to be turned on.

2. The charging module according to claim 1, wherein
the controller is further configured to: after controlling the first switch to be turned on, when an absolute value of a voltage difference between two ends of a second switch in the two switches is less than or equal to a second voltage threshold, control the second switch to be turned on.

3. The charging module according to claim 2, wherein the AC-DC power conversion circuit comprises three phase rectifier circuits, input ends of the three phase rectifier circuits are the three input ends of the AC-DC power conversion circuit, output ends of the three phase rectifier circuits are connected in parallel, and the output ends of the three phase rectifier circuits are an output end of the AC-DC power conversion circuit; and
the controller is further configured to: after controlling the first switch to be turned on and before controlling the second switch to be turned on, control a rectifier circuit that is in the three phase rectifier circuits and that is connected to the second switch not to work, and control the other rectifier circuits that are in the three phase rectifier circuits and that are not connected to the second switch to work, so that a voltage at the output end of the AC-DC power conversion circuit is greater than or equal to a third voltage threshold.

4. The charging module according to claim 3, wherein
the controller is further configured to: when it is determined that the voltage at the output end of the AC-DC power conversion circuit is greater than or equal to the third voltage threshold, control the second switch to be turned on.

5. The charging module according to claim 3 or 4, wherein
the controller is further configured to: when duration in which the voltage at the output end of the AC-DC power conversion circuit is greater than or equal to the third voltage threshold is greater than or equal to a preset time threshold, control the second switch to be turned on.

6. A charging device, wherein the charging device comprises a plurality of charging modules and at least one charging connector, the charging module is configured to convert an alternating current into a direct current, and the charging connector is configured to connect to a vehicle, wherein
the charging module comprises a controller, a resistor, an AC-DC power conversion circuit, and two switches, three input ends of the AC-DC power conversion circuit are respectively configured to connect to three phase output ends of an alternating current power supply in a one-to-one correspondence manner, the three input ends of the AC-DC power conversion circuit are further separately configured to connect to a ground end via capacitors, the two switches are respectively disposed between two input ends of the AC-DC power conversion circuit and two corresponding phase output ends of the alternating current power supply, and the resistor is connected in parallel to a first switch in the two switches; and
the controller is configured to: when an absolute value of a voltage difference between two ends of the resistor is less than or equal to a first voltage threshold, control the first switch to be turned on.

7. The charging device according to claim 6, wherein
the controller is further configured to: after controlling the first switch to be turned on, when an absolute value of a voltage difference between two ends of a second switch in the two switches is less than or equal to a second voltage threshold, control the second switch to be turned on.

8. The charging device according to claim 7, wherein the AC-DC power conversion circuit comprises three phase rectifier circuits, input ends of the three phase rectifier circuits are the three input ends of the AC-DC power conversion circuit, output ends of the three phase rectifier circuits are connected in parallel, and the output ends of the three phase rectifier circuits are an output end of the AC-DC power conversion circuit; and
the controller is further configured to: after controlling the first switch to be turned on and before controlling the second switch to be turned on, control a rectifier circuit that is in the three phase rectifier circuits and that is connected to the second switch not to work, and control the other rectifier circuits that are in the three phase rectifier circuits and that are not connected to the second switch to work, so that a voltage at the output end of the AC-DC power conversion circuit is greater than or equal to a third voltage threshold.

9. The charging device according to claim 8, wherein
the controller is further configured to: when it is determined that the voltage at the output end of the AC-DC power conversion circuit is greater than or equal to the third voltage threshold, control the second switch to be turned on.

10. The charging device according to claim 8 or 9, wherein
the controller is further configured to: when duration in which the voltage at the output end of the AC-DC power conversion circuit is greater than or equal to the third voltage threshold is greater than or equal to a preset time threshold, control the second switch to be turned on.
